(19) Europäisches Patentamt
European Patent Office
Office européen des brevets

(11) EP 3 531 552 A1

(12) EUROPÄISCHE PATENTANMELDUNG

(43) Veröffentlichungstag:
28.08.2019 Patentblatt 2019/35

(51) Int Cl.:
H02P 25/06 (2016.01)　　H02P 21/22 (2016.01)

(21) Anmeldenummer: 18167289.0

(22) Anmeldetag: 13.04.2018

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 27.02.2018 EP 18158846

(71) Anmelder: Siemens Aktiengesellschaft
80333 München (DE)

(72) Erfinder:
• Rupprecht, Stefan
92353 Postbauer-Heng (DE)
• Spindler, Carsten
07368 Remptendorf (DE)
• Wedel, Bernd
91096 Möhrendorf (DE)

(54) VERFAHREN ZUM BETREIBEN EINES LINEARMOTORBASIERTEN TRANSPORTSYSTEMS

(57) Die vorliegende Erfindung betrifft ein Verfahren zum Betreiben eines linearmotorbasierten Transportsystems (10), das einen Transportwagen (12) und ein erstes und zweites Segment (k, k+1) einer Transportschiene (14) aufweist. Ein Überdeckungsgrad (a) des Transportwagens (12) wird erfasst, wobei der Überdeckungsgrad (a) angibt, welcher Anteil einer Oberfläche eines Primärteils (16) des Transportwagens (12) sich senkrecht über dem ersten Segment (k) befindet. Im weiteren Verlauf werden eine erste Stromstärke (I1) und eine zweite Stromstärke (I2) derart ermittelt, dass zum einen eine Summe der resultierenden elektromotorischen Kräfte (F) zwischen dem Transportwagen (12) und den beiden Segmenten einem vorgegebenen Kraftverlauf entspricht. Das Ermitteln erfolgt dabei zugleich so, dass eine Summe der ohmschen Verluste (PV), verursacht durch die aufgrund der ersten und zweiten Stromstärke (I1, I2) auftretenden Stromflüsse, des ersten und zweiten Segments (k, k+1) minimiert wird. Aufgrund der optimierten Stromstärken kann die Effizienz, Wirtschaftlichkeit sowie die Produktivität verbessert werden. Auch eine höhere Nennkraft ist möglich.

FIG 4

EP 3 531 552 A1

**Beschreibung**

Die vorliegende Erfindung betrifft ein Verfahren zum Betreiben eines linearmotorbasierten Transportsystems, das einen Transportwagen und damit in elektromagnetischer Wechselwirkung stehendes erstes und zweites Segment einer Transportschiene aufweist.

Industrielle Produktionsprozesse müssen heutzutage teilweise sehr flexibel sein. Daher kann es erforderlich sein, bestimmte Anlagen umzurüsten. Ein flexibles und effizientes linearmotorbasiertes Transportsystem für industrielle Anlagen kann dabei helfen, die dazu nötigen Umrüstzeiten sowie die entstehenden Kosten möglichst gering zu halten. Ein solch flexibles Transportsystem wird oft auch als Multi-Carrier-System bezeichnet.

Wird ein Transportwagen des linearmotorbasierten Transportsystems von einem Segment zum nächsten Segment verfahren, so werden beim Übergang beide Segmente gleichermaßen bestromt. Der Begriff "Bestromen" oder "bestromt" bedeutet insbesondere, dass etwas mit elektrischem Strom versorgt wird. Wenn ein Segment bestromt wird, heißt dies insbesondere, dass ein Stromsteller eine veränderliche Spannung an die Spulen des Segments anlegt, um einen gewünschten Stromsollwert zu erzielen. Dabei entstehen auf beiden Segmenten elektrische Verluste, die Vorschubkraft ist jedoch von einem Überdeckungsgrad zwischen dem Primärteil der Transportschiene und einem Sekundärteil des Transportwagens abhängig. Somit entstehen bei kleinen Überdeckungsgraden die gleichen Verluste, die anteiligen Vorschubkräfte sind jedoch deutlich geringer. Das Verhältnis zwischen Wirkleistung und ohmschen Verlusten wird folglich mit abnehmender Überdeckung schlechter. Die jeweiligen elektromotorischen Kräfte werden nicht verändert, sodass bei einem konstanten Kraftsollwert alle Segmente denselben konstanten Stromsollwert erhalten. Die daraus resultierende Kraft auf ein Segment ist direkt vom Überdeckungsgrad abhängig. Die Summe der einzelnen Kräfte betreffend die jeweiligen Segmente ergibt den geforderten Kraftsollwert. Wird für jedes Segment dieselbe Stromstärke bereitgestellt, entstehen somit insgesamt größere ohmsche Verluste.

Die Aufgabe der vorliegenden Erfindung besteht somit darin, die Effizienz beim Betreiben eines linearmotorbasierten Transportsystems zu erhöhen.

Diese Aufgabe wird gemäß den unabhängigen Patentansprüchen dieser Anmeldung gelöst. Sinnvolle Weiterbildungen ergeben sich aus den Unteransprüchen.

Die Erfindung sieht ein Verfahren zum Betreiben eines linearmotorbasierten Transportsystems, das einen Transportwagen und damit in elektromagnetischer Wechselwirkung stehendes erstes und zweites Segment einer Transportschiene aufweist. Die Transportschiene weist oft mehr als zwei Segmente auf. Das erfindungsgemäße Prinzip betrifft insbesondere zwei Segmente, welche vom Transportwagen zu einem Zeitpunkt überfahren werden bzw. welche der Transportwagen zumindest teilweise gerade bedeckt. Es können jedoch auch mehr als zwei Segmente vom Transportwagen überdeckt sein. Das heißt in der Regel ist der Transportwagen auf beziehungsweise über der Transportschiene angeordnet.

Das linearmotorbasierte Transportsystem kann auch gebogen ausgeführt sein. Dies kann vor allem bedeuten, dass einzelne Segmente gekrümmt ausgeführt sind. So kann das linearbasierte Transportsystem auch Kurven aufweisen. Der Begriff "linearmotorbasiert" bedeutet also nicht, dass stets nur eine geradlinige Anordnung der Segmente gegeben sein muss. Gebogene oder gekrümmte Segmente sind dennoch möglich.

Der Transportwagen kann beispielsweise mittels Schienen auf der Transportschiene geführt werden. In einem Schritt a) wird ein Überdeckungsgrad des Transportwagens zwischen einem Primärteil im ersten Segment und einem Sekundärteil im Transportwagen erfasst. Dabei gibt der Überdeckungsgrad an, welcher Anteil einer Oberfläche (auch zweite Oberfläche oder Sekundärteiloberfläche genannt) des Sekundärteils des Transportwagens sich senkrecht über dem Primärteil des ersten Segments befindet. Der Überdeckungsgrad des Transportwagens gibt dabei insbesondere an, welcher Anteil der Oberfläche des Primärteils (auch erste Oberfläche oder Primärteiloberfläche genannt) im ersten Segment sich mit jenem Anteil der Oberfläche des Sekundärteils im Transportwagen überlappt beziehungsweise überschneidet.

Eine senkrechte Projektion der Oberfläche des Primärteils in Richtung des Transportwagens oder des Sekundärteils ergibt ein virtuelles Raumgebiet. Diejenige Oberfläche des Sekundärteils, welche sich in diesem so definierten virtuellen Raumgebiet befindet, wird für die Ermittlung des Überdeckungsgrads berücksichtigt.

Anders ausgedrückt ist ein Punkt einer Oberfläche des Sekundarteils dann senkrecht über der Oberfläche des Primärteils, wenn ausgehend von diesem Punkt der Oberfläche des Sekundarteils eine gedachte Linie zu dem Primärteil führt, wobei diese gedachte Linie den Punkt beinhaltet und auf der Oberfläche des Sekundärteils senkrecht steht.

In vielen Fällen weist das Primärteil eine Spuleneinheit mit einer oder mehreren Spulen auf und das Sekundärteil weist einen Permanentmagneten oder mehrere Permanentmagnete auf. Zwischen den Spulen des Primärteils und den Permanentmagneten des Sekundärteils findet insbesondere die elektromagnetische Wechselwirkung statt. Das Sekundärteil beziehungsweise dessen Wirkoberfläche ist bevorzugt am unteren Teil des Transportwagens zur Transportschiene hin orientiert angeordnet. Anders ausgedrückt zeigt ein Normalenvektor, welcher auf der Oberfläche des Sekundärteils senkrecht steht, in Richtung der Transportschiene.

In einem Schritt b) wird eine erste Stromstärke für das erste Segment und eine zweite Stromstärke für das zweite Segment zum Bestromen der beiden Segmente ermittelt. Das Ermitteln erfolgt dabei derart, dass eine Summe der resultierenden elektromotorischen Kräfte zwischen dem Transportwagen und den beiden Segmenten einem vorgegebenen Kraftverlauf entspricht und zugleich eine Summe der ohmschen Verluste, verursacht durch die aufgrund der ersten und zweiten Stromstärke auftretenden Stromflüsse, des ersten und zweiten Segments minimiert wird. Dies bedeutet, dass im Gegensatz zum Stand der Technik in diesem Fall die beiden Stromstärken sich durchaus unterscheiden können. Unter speziellen Randbedingungen kann die erste Stromstärke mit der zweiten Stromstärke vom Betrag her übereinstimmen. In der Regel unterscheidet sich jedoch die erste Stromstärke von der zweiten Stromstärke. Die Ermittlung dieser beiden Stromstärken erfolgt so, dass die zwei genannten Bedingungen bestmöglich zugleich erfüllt werden. Der Begriff Bestromen bedeutet insbesondere, dass etwas mit elektrischem Strom versorgt wird. Wenn ein Segment bestromt wird, heißt dies insbesondere, dass ein Stromsteller eine veränderliche Spannung an der Spuleneinheit des Segments anlegt, um einen gewünschten Stromsollwert zu erzielen. Dies gilt sowohl für das erste und zweite Segment.

Die erste Bedingung besagt, dass die Summe der resultierenden elektromotorischen Kräfte zwischen dem Transportwagen und den beiden Segmenten einem vorgegebenen Kraftverlauf entspricht. Der Kraftverlauf kann insbesondere von einer gewünschten Bewegung des Transportwagens und äußeren Einflüssen, wie zum Beispiel der Reibung, abhängig sein. Der vorgegebene Kraftverlauf ist insbesondere die Summe der elektromotorischen Einzelkräfte der vom Transportwagen überdeckten Segmente. Die jeweilige Einzelkraft des Segments ist vom Überdeckungsgrad abhängig. Aufgrund der ersten und zweiten Stromstärke werden durch die jeweiligen Primärteile der beiden Segmente auf das Sekundärteil des Transportwagens elektromotorische Einzelkräfte übertragen. Dabei bezieht sich insbesondere die erste elektromotorische Kraft auf das erste Segment und die zweite elektromotorische Kraft auf das zweite Segment. Die Summe dieser beiden elektromotorischen Kräfte ergibt dabei den vorgegebenen Kraftverlauf. Dies kann insbesondere bedeuten, dass die jeweilige elektromotorische Einzelkraft von dem Überdeckungsgrad und/oder der Zeit abhängig ist. Die Zeitabhängigkeit eines Verlaufs einer elektromotorischen Einzelkraft kann sich dadurch ergeben, dass sich der Überdeckungsgrad aufgrund einer Bewegung des Transportwagens zeitlich ändert. Zu beachten ist jedoch, dass die Summe der elektromotorischen Einzelkräfte dem vorgegeben Kraftverlauf entspricht, wobei die Summe der elektromotorischen Einzelkräfte insbesondere nicht von dem Überdeckungsgrad abhängig ist.

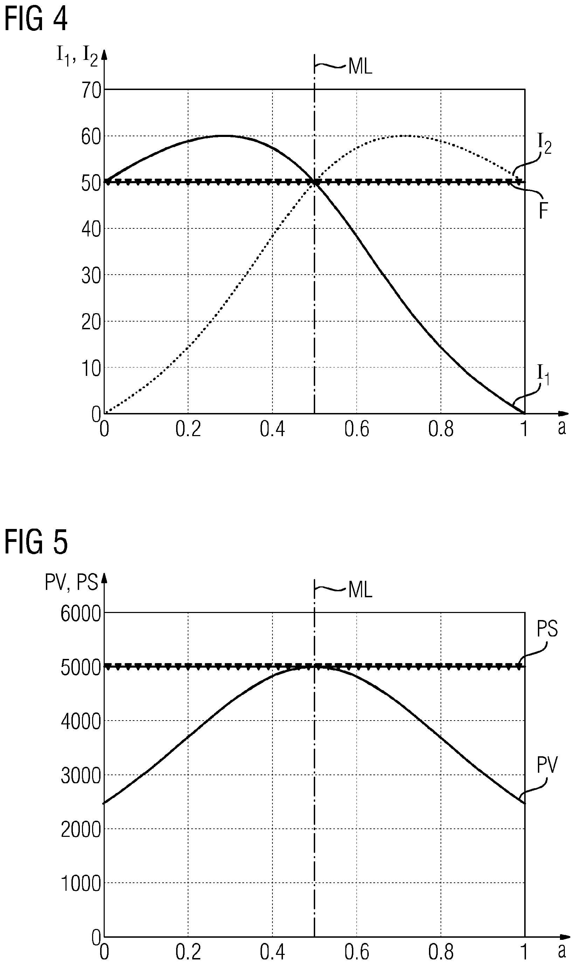

Im einfachsten Fall, wie in FIG 4 dargestellt, ist der vorgegebene Kraftverlauf konstant. Wenn gewünscht ist, dass der Transportwagen beschleunigen soll, kann ein ansteigender Kraftverlauf vorgegeben sein. Bei einer Verzögerung könnte zum Beispiel ein anderer Kraftverlauf mit einem entsprechend entgegengesetzten Vorzeichen vorgegeben werden. Der Kraftverlauf kann je nach Segment, Transportwagen und Überdeckungsgrad unterschiedlich vorgegeben sein.

Zugleich muss noch eine weitere zweite Bedingung erfüllt werden. Eine Summe der ohmschen Verluste, verursacht durch die aufgrund der ersten und zweiten Stromstärke auftretenden Stromflüsse des ersten und zweiten Segments, wird minimiert. Die ohmschen Verluste werden oft auch als Verlustleistung bezeichnet und werden in der Regel durch ohmsche Widerstände hervorgerufen. In der Regel weist sowohl das erste Segment als auch das zweite Segment ohmsche Verluste auf. Die zweite Bedingung besagt nun, dass die Summe der ohmschen Verluste der beiden Segmente aufgrund der Aufteilung der Stromstärken kleiner beziehungsweise nicht größer ist als die Summe der ohmschen Verluste bei identischen Stromstärken. Dabei ist jedoch zu berücksichtigen, dass für diesen Vergleich dieselbe Summe der resultierenden elektromotorischen Kräfte zugrunde gelegt wird. Bei gleicher resultierender elektromotorischer Kraft beziehungsweise bei gleicher Summe der resultierenden elektromotorischen Kräfte ergeben sich aufgrund der Aufteilung der Stromstärke ohmsche Verluste, welche kleiner beziehungsweise nicht größer sind als im Falle konstanter Stromstärken für das erste und zweite Segment. Damit kann der Energieverbrauch des linearbasierten Transportsystems reduziert werden, was zu einer Kostenersparnis führen kann. Das so verbesserte linearmotorbasierte Transportsystem kann bei gleichem Energieverbrauch eine höhere Nennkraft beziehungsweise höhere nutzbare Nennleistung für die Transportwagen bereitstellen. Damit kann eine höhere Produktivität erzielt werden.

Eine weitere Variante dieser Erfindung sieht vor, dass der Überdeckungsgrad anhand einer vorgegebenen Geometrie der Transportschiene ermittelt wird. In dieser Variante der vorliegenden Erfindung sind der Verlauf der Transportschiene sowie insbesondere die Länge der jeweiligen Segmente im Vorfeld bekannt. Bevorzugt sind auch die Abmessungen des Transportwagens bekannt. Dies betrifft insbesondere das Sekundärteil beziehungsweise die effektive Wirkoberfläche des Sekundärteils. Sind diese geometrischen Randbedingungen bekannt, so kann bei einer vorgegebenen Position des Transportwagens der jeweilige Überdeckungsgrad ermittelt werden. Die jeweiligen Überdeckungsgrade können ebenfalls in Abhängigkeit von der Position des Transportwagens in einer Look-up-Tabelle hinterlegt sein.

Die jeweilige Position des Transportwagens kann auf unterschiedliche Weise bestimmt werden. Beispielsweise kann die Position des Transportwagens mit Hilfe von optischen, magnetostriktiven und/oder magnetischen Sensoren bestimmt werden. Zusätzlich oder alternativ kann die Transportschiene eine Serie von Hall-Sensoren, sogenannte Hall-Sensor-Arrays aufweisen. Ein Magnet zur Positionserfassung kann in Abhängigkeit von der Position des Transportwagens eine Hall-Spannung in einer oder mehreren Hall-Sensoren erzeugen. Über den Hall-Effekt kann so auf die Position des Transportwagens geschlossen werden.

Weitere Beispiele zur Positionsbestimmung des Transportwagens sind durch die Möglichkeiten eines Ultraschallsensors oder eines Laserscanners mit jeweils entsprechender Objekterfassung gegeben. Ebenso ist es möglich, dass eine oder mehrere Kameras die Transportschiene visuell erfassen und anhand mehrerer aufgenommener Bilder eine dreidimensionale Objektrekonstruktion erfolgt. Es ist auch denkbar, dass die Position des jeweiligen Transportwagens anhand einer veränderten Lichtverteilung ermittelt wird, welche durch den Transportwagen beeinflusst wird. Die Ermittlung des Überdeckungsgrads anhand geometrischer Randbedingungen ist in der Regel am wenigsten fehleranfällig. Somit kann der Überdeckungsgrad zum einen über die Position des Transportwagens in Verbindung mit einer bekannten Geometrie des linearmotorbasierten Transportsystems ermittelt werden.

Die Ermittlung des Überdeckungsgrads erfolgt dabei zumindest derart genau, dass das erfindungsgemäße Verfahren erfolgreich durchgeführt werden kann. Vorzugsweise wird die Position des Transportwagens direkt gemessen. Ist beispielsweise die induzierte Spannung für das erste Segment mit der induzierten Spannung für das zweite Segment identisch, so ist bei sonst gleichen Einflussfaktoren für das erste und zweite Segment der Überdeckungsgrad näherungsweise 0,5 beziehungsweise 50 %. In diesem Fall wären eine Hälfte der effektiven Oberfläche des Sekundärteils des Transportwagens über dem ersten Segment und die andere Hälfte senkrecht über dem zweiten Segment angeordnet. Unterscheiden sich jedoch die beiden Segmente beispielsweise in der Anzahl und Art ihrer Wicklungen, so müsste dieser unterschiedliche Einflussfaktor entsprechend mitberücksichtigt werden. Dies kann entsprechend automatisch durch eine Steuereinheit erfolgen. Vorteilhaft ist hierbei, dass keine weitere Sensorik zur Objekterkennung beziehungsweise Objektlokalisation benötigt wird. Auf den Einsatz eines weiteren Sensorsystems kann im Idealfall in dieser Variante der Erfindung verzichtet werden.

Die Position des jeweiligen Transportwagens kann jedoch anderweitig ermittelt werden. Alternativ kann zur Bestimmung des Überdeckungsgrads eine induzierte Spannung oder eine Stromstärke zur Bestimmung des Überdeckungsgrads gemessen werden. Der Überdeckungsgrad kann so zum Beispiel indirekt über ein Spannungsverhältnis der von mehreren Segmenten induzierten Spannungen zumindest indirekt ermittelt werden. Der Überdeckungsgrad kann in der Regel nicht direkt aus den induzierten Spannungen abgeleitet werden, vielmehr können hier Indirektionen vorliegen. Dies bedeutet insbesondere, dass aus der induzierten Spannung auf einen elektrischen Winkel geschlossen wird und anhand des elektrischen Winkels die Position des Transportwagens bestimmbar ist. Anhand der so ermittelten Position kann der Überdeckungsgrad bestimmt werden.

Eine weitere Variante der Erfindung sieht vor, dass der Überdeckungsgrad in Abhängigkeit von einer jeweils am ersten Segment und zweiten Segment induzierten Spannung ermittelt wird. Aufgrund der elektromagnetischen Wechselwirkungen zwischen dem Primärteil des Segments und dem Sekundärteil des Transportwagens treten insbesondere bei einer Bewegung des Transportwagens induzierte Spannungen auf. Fährt zum Beispiel der Transportwagen von dem ersten Segment auf beziehungsweise über das zweite Segment, so treten bei beiden Segmenten induzierte Spannungen auf. Diese induzierten Spannungen können durch eine entsprechende Spannungsmessung registriert und erfasst werden. Der jeweilige Betrag der induzierten Spannung ist dabei ebenfalls ein Maß für den Überdeckungsgrad. Das heißt am ersten Segment kann eine erste Spannung induziert werden und am zweiten Segment kann eine zweite Spannung induziert werden. Das Verhältnis dieser beiden Spannungen zueinander ist insbesondere eine Größe, welche erlaubt, auf den Überdeckungsgrad zu schließen.

Ein weiteres Verfahren der vorliegenden Erfindung sieht vor, den Überdeckungsgrad mit Hilfe der vorgegebenen Geometrie des linearmotorbasierten Transportsystems und der Position des Transportwagens aus einem geberlosen Regelverfahren zu gewinnen. Zur Bestimmung der Position des Sekundärteils werden nach dem Stand der Technik Testsignale oder induzierte Spannungen verwendet. Mit Hilfe von ebenfalls bekannten Modellen des Motors und des Inverters kann die Qualität des Positionssignals verbessert werden. Mit einem Modell des Inverters ist es möglich, auf eine externe Spannungsmessung zu verzichten. Stattdessen wird diese aus der Sollspannung errechnet. So kann beispielsweise anhand von Spannungsabfällen an bestimmten Transistoren (z.B. IGBT) die induzierte Spannung und somit die aktuelle Position des Sekundärteils genauer berechnet werden.

Ein weiteres Verfahren der vorliegenden Erfindung sieht vor, dass der Überdeckungsgrad zumindest näherungsweise anhand eines Verhältnisses der elektromotorischen Kräfte betreffend das erste und das zweite Segment ermittelt wird. Die elektromotorischen Kräfte können nicht direkt gemessen werden, weshalb sie indirekt über andere messbare Größen bestimmt werden. In manchen Fällen ist die Geometrie der Transportschiene nicht vorgegeben beziehungsweise die jeweilige Position des Transportwagens nicht hinreichend genug bekannt. Eine solche messbare Größe, die auf die Position des Transportwagens schließen lässt kann zum Beispiel eine im Motor induzierte Spannung (entgegengesetzte elektromotorische Kraft) sein, die anhand der im Umrichter gemessenen Klemmenspannung gemessen werden kann. Daraus kann die induzierte Spannung über ein Motormodell errechnet werden. Vorzugsweise wird eine am jeweiligen Segment induzierte Spannung zur Bestimmung der aktuellen Position des Transportwagens gemessen.

In einer vereinfachten Betrachtung wird angenommen, dass alle weiteren Einflussfaktoren für die beiden betreffenden Segmente konstant sind. Das heißt mithilfe der am ersten und zweiten Segment jeweils induzierten Spannung sowie gegebenenfalls der dazugehörigen Stromstärke kann in dieser Variante auf ein Verhältnis der beiden Überdeckungsgrade des ersten und zweiten Segments geschlossen werden.

Der Überdeckungsgrad kann insbesondere ohne Kenntnis der genauen Geometrie der Segmente ermittelt werden. Daher sieht eine weitere Variante der Erfindung vor, dass der Überdeckungsgrad in Abhängigkeit von einer jeweils am ersten Segment und zweiten Segment induzierten Spannung ermittelt wird, ohne dass die Geometrie von Primärteil und Sekundärteil berücksichtigt werden muss. Aufgrund der elektromagnetischen Wechselwirkungen zwischen dem Primärteil des Segments und dem Sekundärteil des Transportwagens treten insbesondere bei einer Bewegung des Transportwagens induzierte Spannungen auf.

Fährt zum Beispiel der Transportwagen von dem ersten Segment auf beziehungsweise über das zweite Segment, so treten bei beiden Segmenten induzierte Spannungen auf. Mit Hilfe von Regelverfahren, die in weiteren Varianten beschrieben werden funktioniert bei diesen Varianten, kann die induzierte Spannung in jedem Element mit Hilfe von Motor- und Invertermodellen errechnet werden. Der jeweilige Betrag der induzierten Spannung ist dabei ebenfalls ein Maß für den Überdeckungsgrad. Das heißt am ersten Segment kann eine erste Spannung induziert werden und am zweiten Segment kann eine zweite Spannung induziert werden. Das Verhältnis dieser beiden Spannungen zueinander ist insbesondere eine Größe, welche erlaubt, auf den Überdeckungsgrad zu schließen. Mit Hilfe dieses Spannungsverhältnisses sowie vorgegebener Eigenschaften der beteiligten Segmente kann der Überdeckungsgrad bestimmt beziehungsweise berechnet werden. Die vorgegebenen Eigenschaften können beispielsweise die Anzahl der Wicklungen oder eine Materialkonstante beinhalten.

Somit kann zum Beispiel ein Verhältnis der Spannungen verwendet werden, welche jeweils an den beiden Segmenten induziert werden. Mit Hilfe dieses Spannungsverhältnisses sowie vorgegebener Eigenschaften der beteiligten Segmente kann der Überdeckungsgrad bestimmt beziehungsweise berechnet werden. Die vorgegebenen Eigenschaften können beispielsweise die Anzahl der Wicklungen oder eine Materialkonstante beinhalten.

Alternativ kann anstelle der gemessenen induzierten Spannung eine interne Regelgröße eines Stromstellers zur Ermittlung des Überdeckungsgrads eingesetzt werden. Hier kann zum Beispiel ein interner Spannungssollwert des Stromstellers zur Bestimmung des Überdeckungsgrads verwendet werden. Diese Variante böte sich an, wenn kein Spannungsmesser zum Messen der induzierten Spannung verfügbar ist. In diesem Fall ist der interne Spannungssollwert vermutlich ungenauer als die gemessene induzierte Spannung, dafür kann man sich den Einsatz eines zusätzlichen Spannungsmessers ersparen. Um den fehlenden Spannungsistwert aus dem Spannungssollwert zu errechnen, kann ein Modell eines Umrichters der Spannungssteuerung und ein Modell des Motors, das zumindest einen Widerstand und zumindest eine Induktivität beinhaltet, berücksichtigt werden.

So kann beispielsweise anhand von Spannungsabfällen an bestimmten Transistoren (z.B. IGBT) auf die induzierte Spannung geschlossen werden. Es ist also möglich, die induzierte Spannung nicht direkt messen zu können, sondern anhand einer mit der induzierten Spannung korrelierten Spannung auf die induzierte Spannung zu schließen. Anders ausgedrückt kann durch Nutzung einer anderen Spannung und unter Zuhilfenahme eines geeigneten Modells auf die induzierte Spannung geschlossen werden beziehungsweise die induzierte Spannung so modellhaft berechnet werden.

Eine weitere Variante dieser Erfindung sieht vor, dass der Überdeckungsgrad bei einer Bewegung des Transportwagens kontinuierlich ermittelt und in Abhängigkeit von dem Überdeckungsgrad die erste und zweite Stromstärke kontinuierlich ermittelt werden. Da in der Regel der Transportwagen sich über die Transportschiene bewegt, ändert sich auch kontinuierlich der Überdeckungsgrad. Um nun auch in diesem Fall eine möglichst hohe Effizienz des linearmotorbasierten Transportsystems zu erreichen, werden die erste und zweite Stromstärke in dieser Variante ebenfalls kontinuierlich ermittelt. Insbesondere werden die erste und zweite Stromstärke am jeweiligen Segment kontinuierlich neu adaptiert beziehungsweise eingestellt. Werden die erste und zweite Stromstärke jeweils kontinuierlich ermittelt und entsprechend an dem ersten und zweiten Segment ausgeregelt, so kann während der Bewegung des Transportwagens ebenfalls eine Reduzierung der ohmschen Verluste erreicht werden.

Das Prinzip in dieser Variante der Erfindung entspricht dem des Hauptanspruchs, wobei die Verfahrensschritte a) und b) kontinuierlich ausgeführt werden. Sie werden insbesondere nach einem Zeitschritt mit Schritt a) beginnend erneut ausgeführt. Der Zeitschritt kann dabei in Abhängigkeit von der Geschwindigkeit des Transportwagens bestimmt sein. Auch kann sich mit einer höheren Wiederholungsfrequenz der Verfahrensschritte a) und b) eine weitere Energieoptimierung ergeben. Beispielsweise kann eine Frequenz vorgegeben sein, die angibt, wie oft die jeweiligen Stromstärken in einem Zeitintervall ermittelt und eingestellt werden. Dabei kann diese Frequenz in Abhängigkeit von einer Geschwindigkeit des Transportwagens ermittelt werden. Bewegt sich der Transportwagen beispielsweise sehr langsam, so kann eine niedrigere Frequenz betreffend die Ausführung der Verfahrensschritte a) und b) möglich sein als im Fall einer höheren Geschwindigkeit des Transportwagens. Das heißt die Häufigkeit der Verfahrensschritte innerhalb eines Zeitintervalls kann in Abhängigkeit von der Geschwindigkeit des Transportwagens ermittelt werden beziehungsweise vorgegeben sein.

In einer weiteren Variante ist vorgesehen, dass die Stromstärken derart eingestellt werden, dass nach einer d/q-Transformation die d-Komponente konstant gehalten wird. Die d/q-Transformation wird oft auch als Park-Transformation bezeichnet. Sie wird oft dazu eingesetzt, dreiphasige Größen wie zum Beispiel mit den Achsen U, V, W in ein zweiachsiges Koordinatensystem mit den Achsen d und q zu transformieren. Die d/q-Transformation beschreibt insbesondere eine von mehreren möglichen Raumzeigerdarstellungen. In der Regel wird das d/q-Koordinatensystem als rotierendes Koordinatensystem eingesetzt. Dabei beschreibt die d-Komponente insbesondere eine Stärke der magnetischen Flussdichte. Die q-Komponente ist meist ein Ausdruck für ein erzeugtes Drehmoment. In dieser Darstellung trägt insbesondere die q-Komponente dazu bei, die elektromotorische Kraft bereitzustellen. Eine veränderliche d-Komponente der Stromstärke hingegen trägt in der Regel nicht oder meist kaum zur Steigerung der Wirkleistung bei. Wird das linearmotorbasierte Transportsystem beispielsweise mit einem dreiphasigen Wechselstrom betrieben, so kann mithilfe der d/q-Transformation eine leichtere und effizientere Einteilung der jeweiligen Stromstärken erfolgen.

Eine weitere Variante der Erfindung sieht vor, dass in einem geregelten Betrieb die Stromstärken (I1, I2) aus einem Verfahren zur feldorientierten Regelung resultieren und kraftbildende oder kraftbildende und feldbildende Stromkomponenten aufweisen. Diese Variante der Erfindung sieht einen geregelten Betrieb der einzelnen Segmente des linearmotorbasierten Transportsystems vor. Dies bedeutet, dass jedem Segment in einer Steuereinheit ein Drehzahl- und ein Stromregler zugeordnet sind. Der geregelte Betrieb macht typischerweise ein Messsystem zur Erfassung der Lage und der Geschwindigkeit des Sekundärteils notwendig. Aus der erfassten Lage des Sekundärteils auf dem Segment kann die elektrische Lage des Sekundärteils bestimmt werden.

Ein Drehzahlregler kann laufend Soll- und Istwert der Geschwindigkeit vergleichen. Aus einer eventuellen Geschwindigkeitsabweichung kann der Drehzahlregler einen Kraftsollwert generieren, der über die Kraftkonstante des Segments in einen kraftbildenden Stromsollwert Iq für den Stromregler umgerechnet werden kann. Der feldbildende Stromsollwert Id wird insbesondere unterhalb des sogenannten Feldschwächbereichs auf 0 gehalten.

In einem geregelten Betrieb können Motorparameter, welche die elektromotorische Kraft beeinflussen, in Abhängigkeit vom Überdeckungsgrad angepasst werden. Das Regeln der Stromstärken erfolgt vorzugsweise dadurch, dass ein oder mehrere Motorparameter betreffend den jeweiligen Stromgeber, hier insbesondere als Stromregler ausgeführt, für die erste und zweite Stromstärke so eingestellt werden, dass sich der vorgegebene Kraftverlauf ergibt und zugleich die ohmschen Verluste minimiert werden.

Im geregelten Betrieb ist insbesondere bei einem permanent erregten Synchronmotor vorgesehen, dass die d-Komponente einer der transformierten Stromstärken auf 0 eingestellt wird. Jedoch kann in einem anderen Betriebsmodus eine anderweitige Regelung vorgesehen sein, bei der die d-Komponente nicht auf 0 eingestellt wird. Es sind also Betriebsmodi möglich, bei denen die d-Komponente nicht auf 0 gehalten wird. Da bei einer d/q-Transformation die d-Komponente der Stromstärken in der Regel nicht zur Kraft beiträgt, sondern vielmehr sogar zu Wirbelstromverlusten führen kann, ist die d-Komponente auf angenommen 0 eingestellt. Damit können die auftretenden Verlustleistungen beziehungsweise ohmschen Verluste noch weiter reduziert werden. Die Energieeffizienz kann so noch weiter erhöht werden. In dieser Variante der Erfindung kann insbesondere eine Kraftvorsteuerung betreffend die beiden Segmente aktiviert sein. So können die beiden Segmente in gleicher Weise adaptiert werden. Dies geschieht insbesondere durch das Einstellen der jeweiligen q-Komponente betreffend die beiden Segmente der Transportschiene.

Eine weitere Variante der Erfindung sieht vor, dass in einem gesteuerten Betrieb die erste und zweite Stromstärke aus einem Verfahren zur geberlosen feldorientierten Regelung resultieren und sowohl kraftbildende als auch feldbildende Stromkomponenten aufweisen. In dieser Variante der Erfindung ist ein gesteuerter Betrieb der einzelnen Segmente des linearmotorbasierten Transportsystems vorgesehen. Der gesteuerte Betrieb wird vorzugsweise verwendet, wenn kein Messsystem zur Erfassung der Lage und der Geschwindigkeit des Sekundärteils vorhanden ist.

Aus einem resultierenden Stromzeiger kann sich über die Park-Transformation und dem aus der Lagemessung errechneten Transformationswinkel ein Spannungszeiger ergeben, der mithilfe einer Raumzeigermodulation ausgegeben wird. Bei dieser Variante der Erfindung ist es ebenfalls möglich, die d- und q-Stromsollwerte für das erste und zweite Segment nach dem vorher beschriebenen Verfahren zu optimieren, so dass die ohmsche Verlustleistung minimiert wird.

Um dennoch einen Spannungszeiger für eine Raumzeigermodulation berechnen und ausgeben zu können, werden insbesondere die Stromsollwerte und ein Transformationswinkel intern ohne Rückkopplung berechnet, also gesteuert. Der feldbildende Stromsollwert Id wird dabei insbesondere auf einen parametrierbaren Wert konstant eingestellt. Der Kraftsollwert wird beispielsweise aus der Sollbeschleunigung und der Gesamtmasse berechnet. Dieser kann über die Kraftkonstante in einen kraftbildenden Stromsollwert Iq umgerechnet werden.

Der Transformationswinkel $\Phi$ kann aus einem Startwert und dem Integral der Sollgeschwindigkeit abgeleitet werden. Aus dem resultierenden Stromzeiger ergibt sich in diesem Fall über die Park-Transformation und dem errechneten Transformationswinkel ein Spannungszeiger, der mithilfe einer Raumzeigermodulation ausgegeben wird. Bei dieser Variante der Erfindung ist es ebenfalls möglich, die d- und q-Stromsollwerte für das erste und zweite Segment nach dem vorher beschriebenen Verfahren zu optimieren, so dass die ohmsche Verlustleistung minimiert wird.

In einer weiteren Variante dieser Erfindung ist vorgesehen, dass die erste und zweite Stromstärke mittels eines Optimierungsverfahrens ermittelt werden. Ein beispielhaftes Optimierungsverfahren stellt die Methode des Lagrange-Multiplikators dar. Das Verfahren des Lagrange-Multiplikators ist insbesondere in der mathematischen Optimierung eine Methode zur Lösung von Optimierungsproblemen mit einer oder mehreren Nebenbedingungen. Ein Optimierungsproblem mit Nebenbedingungen ist beispielsweise eine Aufgabe, ein lokales Extremum einer Funktion in mehreren veränderlichen mit einer oder mehreren Nebenbedingungen zu finden. Dabei sind in der Regel die Nebenbedingungen durch Setzen von Funktionen auf gegebene Werte definiert. Diese Methode führt insbesondere eine neue unbekannte skalare Variable für jede Nebenbedingung ein, dem Lagrange-Multiplikator, und definiert eine Linearkombination, die die Multiplikatoren als Koeffizienten einbindet. Die Lösungen der ursprünglichen Optimierungsaufgabe können dann unter gewissen Voraussetzungen als kritische Punkte dieser sogenannten Lagrange-Funktion bestimmt werden. Es können selbstverständlich auch andere Lösungsansätze zur Ermittlung der ersten und zweiten Stromstärke verwendet werden.

Bezüglich des linearmotorbasierten Transportsystems sollen die ohmschen Verluste minimiert werden. Als Nebenbedingung könnte man die Summe der resultierenden elektromotorischen Kräfte verwenden, welche den vorgegebenen Kraftverlauf nachbilden sollen. In diesem Fall würde sich die mathematische Methode des Lagrange-Multiplikators mit zwei Funktionen beschäftigen. Eine Funktion beschreibt dabei die Summe der ohmschen Verluste beziehungsweise die Verlustleistung, die andere Funktion beschreibt die Summe der elektromotorischen Kräfte. Mithilfe eines Lagrange-Multiplikators oder mehreren solchen Lagrange-Multiplikatoren kann ein jeweiliger Verlauf der ersten und zweiten Stromstärke in Abhängigkeit von dem Überdeckungsgrad ermittelt werden. Das Verfahren des Lagrange-Multiplikators kann dabei analytisch oder auch nummerisch erfolgen. Das Verfahren des Lagrange-Multiplikators kann beispielsweise als ein ausführbares Skript hinterlegt sein. Bei einer entsprechenden Dateneingabe kann das Verfahren auf einer elektronischen Steuereinheit gestartet werden und rasch ein Resultat bereitgestellt werden. Im Rahmen dieser Erfindung wurde auf ein mathematisches Programmtoolzurückgegriffen, welches erlaubt, die jeweiligen Stromstärken nummerisch zu ermitteln. Die konkrete Realisierung dieser Optimierungsaufgabe kann unterschiedlich bewerkstelligt werden.

Die vorliegende Erfindung betrifft auch ein linearmotorbasiertes Transportsystem mit einem Transportwagen, der ein Sekundärteil mit einer zweiten Oberfläche zum Generieren einer elektromotorischen Kraft aufweist. Das linearmotorbasierte Transportsystem weist ebenfalls eine Transportschiene auf, die ein erstes Segment und ein zweites Segment aufweist. Die Transportschiene weist ebenfalls ein Primärteil mit einer ersten Oberfläche auf, wobei das Primärteil ausgebildet ist, über die erste Oberfläche eine elektromotorische Kraft auf den Transportwagen zu übertragen. Das linearmotorbasierte Transportsystem weist zudem eine Steuereinheit auf, welche ausgestaltet ist, das erste Segment mit einer ersten Stromstärke und das zweite Segment mit einer zweiten Stromstärke zu bestromen, wenn der Transportwagen zum Teil auf dem ersten und/oder zugleich zum Teil auf dem zweiten Segment befindlich ist. Die Steuereinheit ermittelt die erste und zweite Stromstärke derart, dass zum einen eine Summe der resultierenden elektromotorischen Kräfte einem vorgegebenen Kraftverlauf entspricht und zugleich eine Summe der ohmschen Verluste, verursacht durch die aufgrund der ersten und zweiten Stromstärke auftretenden Stromflüsse, des ersten und zweiten Segments minimiert wird. In dieser Variante der Erfindung ermittelt die Steuereinheit die jeweiligen Stromstärken und teilt diese insbesondere den beiden Segmenten zur Bestromung zu. Die Steuereinheit kann insbesondere das mathematische Verfahren des Lagrange-Multiplikators beinhalten. Diese Zuteilung der Stromstärken kann sowohl im gesteuerten Betrieb als auch im geregelten Betrieb erfolgen.

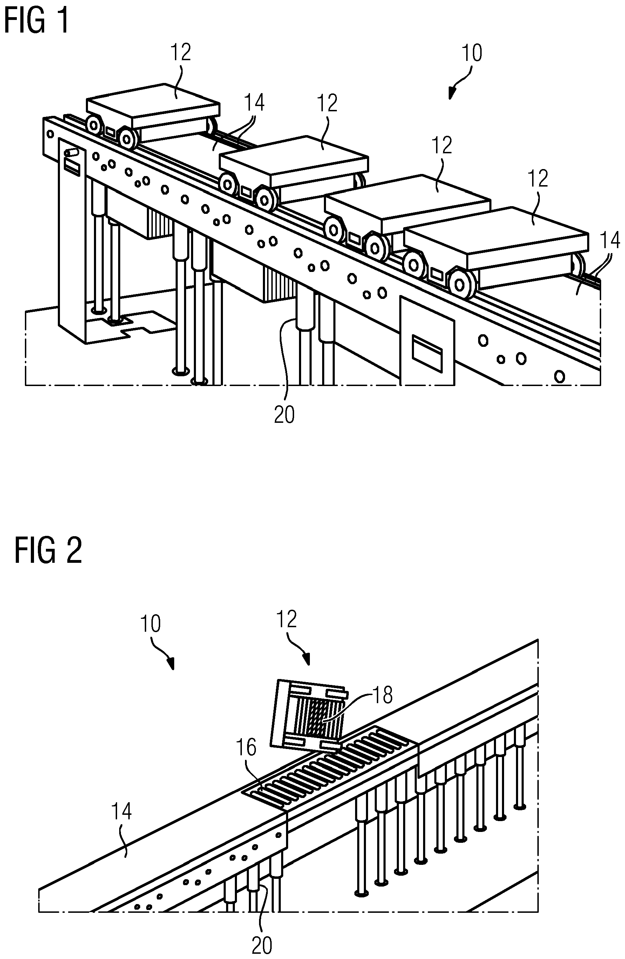

Der Transportwagen kann insbesondere mehrere Räder aufweisen, mit denen der Transportwagen von einem Segment zum nächsten Segment verfahren werden kann. Diese Räder sind bevorzugt, wie in FIG 1 dargestellt ist, als Bodenkontaktelemente ausgebildet. Sie können eine mechanische Verbindung zwischen dem Transportwagen und der Transportschiene herstellen. Über die erste Oberfläche des Primärteils kann mittels elektromagnetischer Wechselwirkungen Energie auf das Sekundärteil übertragen werden. Insbesondere kann jedes Segment ein Primärteil aufweisen. Die Segmente können jeweils eine Abdeckung aufweisen, welche das Primärteil bedeckt. Dabei kann die elektromagnetische Wechselwirkung dennoch auf das Sekundärteil des Transportwagens erfolgen. Die jeweiligen Primärteile der einzelnen Segmente können unterschiedliche Arten und Anzahl von Wicklungen aufweisen. Dies bedeutet, dass die jeweilige magnetische Flussdichte der einzelnen Primärteile unterschiedlich sein kann. Darüber hinaus können die einzelnen Segmente sich ebenfalls in ihrer Länge und ihrem jeweiligen Widerstand unterscheiden. All diese unterschiedlichen Parameter der jeweiligen Segmente kann die Steuereinheit bei der Ermittlung der ersten und zweiten Stromstärke berücksichtigen. Darüber hinaus gelten die in den vorgenannten Ausführungsformen zu dieser Erfindung erwähnten Beispiele und Vorteile analog für dieses linearmotorbasierte Transportsystem.

Eine weitere Ausführungsform dieser Erfindung sieht vor, dass eine Länge des ersten Segments mit der Länge des zweiten Segments identisch ist. Sind die beiden Längen der beiden Segmente identisch, kann das Ermitteln der jeweiligen Stromstärke schneller erfolgen. Die Steuereinheit muss in diesem Fall einen Parameter weniger bei der Ermittlung der ersten und zweiten Stromstärke berücksichtigen. Gegebenenfalls kann dies das Verfahren beschleunigen, was wiederum weniger Rechenaufwand für die Steuereinheit bedeuten würde.

Eine weitere Ausführungsform dieser Erfindung sieht ein linearmotorbasiertes Transportsystem vor, wobei das erste Segment und das zweite Segment unmittelbar nebeneinander angeordnet sind. Um das Verfahren zu beschleunigen, ist es besonders vorteilhaft, dass zwischen den beiden Segmenten keine weiteren Zwischensegmente angeordnet sind. In den allermeisten Fällen befindet sich der Transportwagen bei einem Betrieb des linearmotorbasierten Transportsystems entweder auf einem Segment oder zugleich auf zwei Segmenten. Dies ist insbesondere dann der Fall, wenn der Transportwagen von dem ersten Segment auf das zweite Segment fährt. In diesem Fall sinkt der Überdeckungsgrad betreffend das erste Segment und zugleich steigt der Überdeckungsgrad betreffend das zweite Segment. Daher müssen in den meisten Fällen für einen Transportwagen maximal zwei Segmente zur Ermittlung der ersten und zweiten Stromstärke berücksichtigt werden. Dies kann das Ermitteln der ersten und zweiten Stromstärke beschleunigen und zu einer höheren Effizienz des linearmotorbasierten Transportsystems führen.

Eine weitere Variante der Erfindung sieht ein linearbasiertes Transportsystem vor, wobei der Transportwagen über mehr als zwei Segmente befindlich ist, und für jedes dieser mehr als zwei Segmente ein jeweiliger Überdeckungsgrad ermittelt und zum Ermitteln der jeweiligen Stromstärken für die jeweiligen Segmente berücksichtigt wird.

Zur Vollständigkeit sei erwähnt, dass sich das Prinzip der Erfindung auch anwenden lässt, wenn zwischen dem ersten und zweiten Segment weitere Zwischensegmente angeordnet sind. Dies gilt auch dann noch, wenn zugleich der Oberfläche des Sekundärteils, auch Sekundärteiloberfläche oder zweite Oberfläche genannt, mehr als zwei Segmente überdeckt. In diesem Fall sind die Segmente zwischen den beiden äußersten Segmenten vollständig überdeckt. Das erste Segment und das letzte Segment weisen jedoch einen von eins abweichenden Überdeckungsgrad auf. Das erfindungsgemäße Verfahren funktioniert in diesem Fall entsprechend dem Prinzip der Erfindung. In diesem Fall müssten mehrere Überdeckungsgrade ermittelt und für die Optimierung berücksichtigt werden.

Eine weitere Variante der Erfindung sieht ein linearbasiertes Transportsystem mit einem Stromsteller zum Bestromen der jeweiligen Segmente vor, wobei für das Ermitteln der Stromstärken eine Leistungsgrenze des Stromstellers berücksichtigt wird.

Wie später in FIG 4 gezeigt wird, ergibt sich aufgrund der Optimierung meist für kurze Zeit eine höhere erste Stromstärke als bei einem vergleichbaren Verfahren gemäß dem Stand der Technik, in dem beide Stromstärken konstant gehalten werden. Die erste Stromstärke ist zum Beispiel in FIG 4 im Bereich $0{,}2 < a < 0{,}4$ größer als die Stromstärke gemäß dem Stand der Technik (durchgezogene Linie auf Höhe von 50). Die hier vorgeschlagene Optimierung berücksichtigt insbesondere ob eine vorhandene Hardware-Architektur diesen erhöhten Bedarf an Stromstärke bereitstellen kann. Ist dies möglich, so kann das Optimierungspotential dieser Erfindung voll ausgeschöpft werden. Kann die Hardware den erhöhten Bedarf an Stromstärke nicht decken, wird der Strom vorzugsweise auf den für die Hardware maximal zulässigen Strom begrenzt und die vorgeschlagene Optimierung kann ausschließlich bis zu dieser Maximalwertbegrenzung angewandt werden. In diesem Fall können die ohmschen Verluste nicht so stark minimiert werden. Das heißt das Optimierungspotential der Erfindung kann nicht vollständig erreicht werden, sofern der vorgegebene Kraftverlauf nicht angepasst werden kann oder soll.

Die vorliegende Erfindung wird nun anhand der beigefügten Zeichnungen näher erläutert. Darin zeigen:

FIG 1 ein beispielhaft dargestelltes linearmotorbasiertes Transportsystem mit mehreren Transportwagen;

FIG 2 ein beispielhaftes linearmotorbasiertes Transport-system, wobei eine Abdeckung eines Segments entfernt ist und beispielhaft eine Unterseite des Transportwagens gezeigt ist;

FIG 3 eine schematische Darstellung mehrerer Segmente mit einem Transportwagen und einer dazugehörigen x-Achse;

FIG 4 ein beispielhaftes Diagramm, welches die erste und zweite Stromstärke sowie die Gesamtkraft jeweils in Abhängigkeit von dem Überdeckungsgrad zeigt;

FIG 5 ein schematisches Diagramm, das die Summe der Energieverluste gemäß dem Stand der Technik sowie gemäß dieser Erfindung zeigt.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Die FIG 1 zeigt beispielhaft ein Bild eines linearmotorbasierten Transportsystems 10 mit mehreren darauf platzierten Transportwagen 12. Die Transportwagen 12 sind jeweils auf einer Transportschiene 14 platziert. Die Transportschiene 14 kann wie in FIG 1 gezeigt, mehrere Rillen aufweisen, welche als Schienen für die Transportwagen 12 dienen. Die Transportwagen 12 gemäß FIG 1 weisen mehrere Räder auf, womit die Transportwagen 12 entlang der Transportschiene 14 geführt werden können. Es gibt jedoch auch Möglichkeiten der mechanischen Führung, die ohne Räder auskommen. In der Regel sind die Transportwagen 12 dazu eingerichtet, andere Objekte oder Gegenstände aufzunehmen und entlang der Transportschiene 14 zu transportieren. In einer Brauerei könnten diese Gegenstände beispielsweise Wasserflaschen sein. In einer anderen Lebensmittelfabrik könnten beispielsweise auf dem Transportwagen 12 Plastikbecher angeordnet sein. Somit können unterschiedliche Objekte mittels der Transportwagen 12 und der Transportschiene 14 von einem Produktionsprozess zum nächsten gebracht werden.

In FIG 2 ist ebenfalls das linearmotorbasierte Transportsystem 10 gezeigt, wobei bei einem Segment die entsprechende Abdeckung entfernt ist. An dieser Stelle sind mehrere Drahtwicklungen schematisch angedeutet. Diese Drahtwicklungen stellen insbesondere ein Primärteil 16 des entsprechenden Segmentes dar. Zugleich zeigt die FIG 2 beispielhaft eine Unterseite des Transportwagens 12. An der Unterseite des Transportwagens 12 ist ein Sekundärteil 18 angeordnet. Das Sekundärteil 18 ist in diesem Fall eine ebene Wirkfläche, welche mittig an der Unterseite des Transportwagens 12 angeordnet ist. Die Unterseite des Transportwagens 12 ist im Betrieb in Richtung der Transportschiene 14 ausgerichtet. Über das Primärteil 16 kann eine elektromagnetische Wechselwirkung zum Sekundärteil 18 erfolgen. Damit kann am Transportwagen 12 eine elektromotorische Kraft F generiert werden. Die elektromagnetische Wechselwirkung zwischen Primärteil 16 und Sekundärteil 18 wird insbesondere über die jeweilige Stromstärke angepasst. In FIG 1 und FIG 2 sind mehrere Klemmen 20 dargestellt. Sie können insbesondere dazu eingesetzt werden, die jeweiligen Segmente mit Strom zu versorgen, sie also zu bestromen. Mittels der Klemmen 20 kann ein Stromfluss von einer Stromquelle (z.B. Frequenzumrichter) zu dem ersten Segment k und/oder zweiten Segment k+1 bereitgestellt werden.

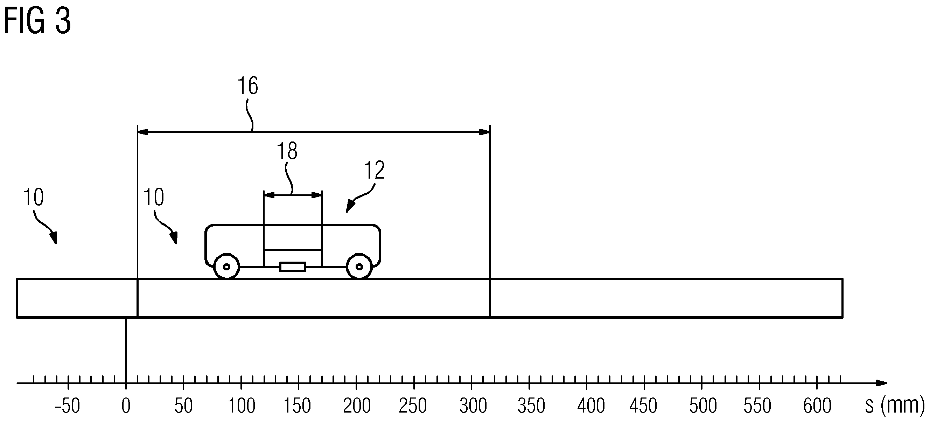

FIG 3 zeigt schematisch den Transportwagen 12, welcher über einem ersten Segment k angeordnet ist. Anhand einer x-Achse s kann die jeweilige Position des Transportwagens 12 genau bestimmt werden. Solange sich der Transportwagen 12 ausschließlich senkrecht über dem ersten Segment k befindet, beträgt der dazugehörige Überdeckungsgrad a eins. In FIG 3 sind zur besseren Kennzeichnung eines virtuellen Raumgebietes, das sich senkrecht über dem Primärteil 16 befindet, zwei nach oben laufende auf dem Primärteil 16 senkrecht stehende Linien eingezeichnet. Zwischen diesen beiden vertikal nach oben und auf dem Primärteil senkrecht stehenden Linien befindet sich also der effektive Wirkbereich des Primärteils 16 (Bereich des Doppelpfeils). Jener Anteil der Oberfläche des Sekundärteils 18 in diesem in FIG 3 beispielhaft gezeigten Raumbereich steht senkrecht über dem Primärteil. In FIG 3 befindet sich der komplette Sekundärteil innerhalb dieses Raumgebietes. Daher ist im Fall von FIG 3 der Überdeckungsgrad a gleich 1. Wäre der Transportwagen 12 vollständig außerhalb dieses Raumbereichs, so wäre der Überdeckungsgrad 0. Befindet sich ein bestimmter Anteil des Sekundärteils 18 innerhalb dieses Raumbereichs, so bestimmt der in diesem Raumbereich enthaltene oberflächenmäßige Anteil des Sekundärteils 18 an der gesamten (zweiten) Oberfläche des Sekundärteils 18 den Überdeckungsgrad a.

Wird der Transportwagen 12 in Richtung eines zweiten Segments k+1 verfahren, so ändert sich beim Übergang des Transportwagens 12 vom ersten zum zweiten Segment k+1 der Überdeckungsgrad a betreffend das erste Segment k. In diesem Beispiel bezieht sich der Überdeckungsgrad a auf das erste Segment k. Sobald ein Anteil der Oberfläche des Sekundärteils 18 sich senkrecht über dem zweiten Segment k+1 befindet, erfolgt insbesondere eine Aufteilung der Stromstärken I1, I2 gemäß dieser Erfindung. Dies bedeutet insbesondere, dass der Segmentübergang erst dann beginnt, wenn das Sekundärteil 18 das zweite Segment k+1 erreicht. Es wird dabei nur jener Anteil der Wirkoberfläche des Sekundärteils 18 dem zweiten Segment k+1 zugeordnet, welcher sich senkrecht über dem zweiten Segment k+1 befindet. Im Beispiel von FIG 3 befindet sich die Wirkoberfläche des Sekundärteils 18 senkrecht über dem ersten Segment k. Der Anteil der Wirkoberfläche des Sekundärteils 18 über dem zweiten Segment k+1 ist in der Darstellung von FIG 3 null.

Am Segmentübergang findet nun eine Optimierung der Antriebsströme der beteiligten Segmente statt. Das heißt die Steuereinheit ermittelt eine erste und eine zweite Stromstärke I1, I2. Das erste Segment k wird mit der ersten Stromstärke bestromt, das zweite Segment k+1 wird mit der zweiten Stromstärke bestromt. Dabei kann sich die erste und zweite Stromstärke I1, I2 insbesondere nur auf einen Überdeckungsgrad beziehen. Bei einer Bewegung des Transportwagens 12 ändert sich insbesondere der Überdeckungsgrad. Verursacht durch die Bewegung des Transportwagens 12 ergibt sich in diesem Fall eine Zeitabhängigkeit. Das heißt die erste und die zweite Stromstärke I1, I2 können jeweils ortsabhängig beziehungsweise zeitabhängig sein. Daraus kann sich vor allem eine zeitabhängige erste Stromstärke I1 und eine zeitabhängige zweite Stromstärke I2 ergeben. Anders ausgedrückt kann die Steuereinheit einen Verlauf beziehungsweise eine Kurve für die erste und zweite Stromstärke I1, I2 ermitteln. Ebenso kann die Steuereinheit die beteiligten Segmente gemäß der ermittelten ersten und zweiten Stromstärke I1, I2 bestromen. Dies bedeutet, dass das erste Segment k gemäß eines Verlaufs der ersten Stromstärke I1 betrieben wird und das zweite Segment k+1 gemäß dem Verlauf der zweiten Stromstärke I2 betrieben wird. Die beiden Segmente können insbesondere über die Klemmen 20 bestromt werden.

Die ohmschen Verluste ergeben sich insbesondere aus der Summe der ersten und zweiten Stromstärke I1, I2 sowie der dazugehörigen Widerstände R1, R2 der Primärteile 16. Die ohmschen Verluste werden dementsprechend mit folgender Formel berechnet:

$$PV = \sum_{k=1}^{n} I_k^2 \cdot R_k \qquad \text{Formel 1}$$

PV ist dabei die Summe der ohmschen Verluste oder die gesamte Verlustleistung. Sie ergibt sich nach Formel 1 durch das Aufsummieren der einzelnen Summanden. Der Index k beschreibt dabei das jeweils aktuelle Segment, welches bestromt wird. In der Regel werden genau zwei Segmente bestromt. In diesem Fall ist die Anzahl n der Segmente genau 2, nämlich das erste Segment k und das zweite Segment k+1. Bei dem Regelfall von genau zwei beteiligten Segmenten ist k+1 gleich n. Der Index k kann prinzipiell bei jeder ganzen Zahl starten. In vielen Fällen wird der Index k für das erste Segment k auf 1 gesetzt. Natürlich kann eine andere Notation der Indizes gewählt werden. Dann müsste Formel 1 entsprechend angepasst werden. Die einzelnen Widerstände und Stromstärken sind in Formel 1 mit den üblichen Variablen $I_k$ und $R$ bezeichnet. In dieser Anmeldung ist der Index k=1 für das erste Segment k. Das heißt das erste Segment k hat den Index 1, das zweite Segment k+1 hat entsprechend den Index 2.

Die elektromotorische Kraft F kann beim Segmentübergang in zwei Einzelkräfte F1 und F2 aufgeteilt werden. Die beiden Einzelkräfte F1 und F2 ergeben dabei die gesamte elektromotorische Kraft F, welche den Transportwagen 12 antreibt. Die einzelnen elektromotorischen Kräfte F1 und F2 werden bevorzugt gemäß folgender Formel berechnet:

$$F1 = K_f \cdot I_1 \cdot (1 - a) \qquad \text{Formel 2}$$

$$F2 = K_f \cdot I_2 \cdot a \qquad \text{Formel 3}$$

$$F = F1 + F2 \qquad \text{Formel 4}$$

$K_f$ ist dabei eine Konstante. In den Formeln 2 und 3 ist a der Überdeckungsgrad. Die Einzelkräfte F1 und F2 betreffen die jeweiligen Segmente k und k+1. Die Summe der beiden Einzelkräfte F1 und F2 ergibt in diesem Beispiel die elektromotorische Kraft F.

Die Steuereinheit ermittelt nun die erste und zweite Stromstärke I1, I2 derart, dass die Summe der ohmschen Verluste PV minimiert wird. Da in der Regel lediglich zwei Segmente beim Segmentübergang beteiligt sind, beträgt die Anzahl der Summanden n=2. Die jeweiligen Widerstände der betreffenden Primärteile 16 sind in Formel 1 mit $R_k$ angegeben. R1 beschreibt dabei den Widerstand des Primärteils 16 von dem ersten Segment k. R2 beschreibt den Widerstand des zweiten Segments k+1. Die Steuereinheit minimiert jedoch die Summe der ohmschen Verluste PV nicht nur gemäß Formel 1, sondern berücksichtigt dabei insbesondere auch die Formeln 2 bis 4. Wäre dem nicht so, so würde sich ergeben, dass bei einer ersten und zweiten Stromstärke von 0 die Summe der ohmschen Verluste minimal sind. Dieses triviale Ergebnis ist jedoch nicht Zweck dieser Erfindung. Denn in diesem Fall wären auch die Kräfte F1 und F2 ebenfalls 0. Es soll jedoch ein Kraftverlauf für die elektromotorische Kraft F bereitgestellt werden, welche nicht konstant 0 ist (punktuell kann jedoch die Kraft F 0 sein), und zugleich soll in diesem Fall die Summe der ohmschen Verluste PV minimal sein. Die Steuereinheit ist daher bevorzugt derart ausgelegt, die so geartete Optimierungsaufgabe zu lösen.

In FIG 4 ist beispielhaft eine Lösung für die erste und zweite Stromstärke I1, I2 in Abhängigkeit von dem Überdeckungsgrad a gezeigt. Im Beispiel von FIG 4 ist das erste Segment k genauso lang wie das zweite Segment k+1. Diese beiden Segmente sind bezüglich ihrer weiteren Parameter ebenso identisch. Die erste Stromstärke I1 ist als durchgehende Linie dargestellt. Die zweite Stromstärke I2 ist dabei punktiert dargestellt. Die Summe der elektromotorischen Einzelkräfte F1 und F2 ist als gesamtelektromotorische Kraft F mit kleinen Dreiecken in FIG 4 dargestellt. Gemäß der Lösung von FIG 4 steigt die erste Stromstärke I1 (durchgezogene Linie) vom Wert 50 beginnend bei einem Überdeckungsgrad a=0 zunächst bis knapp über den Wert 60 bei einem Überdeckungsgrad von etwa 0,3 an. Bei einem weiter zunehmenden Überdeckungsgrad a sinkt die erste Stromstärke I1 von 60 bis auf 0. Der Überdeckungsgrad a gemäß FIG 4 bezieht sich auf das zweite Segment k+1. Dies bedeutet, dass bei einem Überdeckungsgrad von a = 0,3 nach FIG 4 bezüglich des ersten Segments k entsprechend ein Überdeckungsgrad von 1-a vorliegt. Das heißt der Überdeckungsgrad von a=0,3 betreffend das zweite Segment k+1 korrespondiert in FIG 4 mit einem Überdeckungsgrad von 0,7 bezüglich des ersten Segments k.

Die entsprechende zweite Stromstärke I2 ist symmetrisch zur Stromstärke I1 bezüglich einer Mittelachse ML, welche den Überdeckungsgrad a=0,5 repräsentiert. In FIG 4 erreicht die zweite Stromstärke I2 (gestrichelte Linie) ungefähr bei einem Überdeckungsgrad von a = 0,7 bezüglich des zweiten Segments einen Wert von etwa 60 betreffend die zweite Stromstärke I2. Im Fall von FIG 4 kann die zweite Stromstärke I2 durch eine Spiegelung des Verlaufs der ersten Stromstärke I1 an der Mittelachse ML gewonnen werden. Die Mittelachse ML schneidet die x-Achse von FIG 4 bei einem Überdeckungsgrad a von 0,5. Wie FIG 4 weiterhin zeigt, ist die Summe der elektromotorischen Einzelkräfte F1 und F2, welche die elektromotorische Kraft F ergibt, dabei konstant. Die elektromotorische Kraft F verläuft gemäß FIG 4 horizontal in Höhe des y-Werts 50. Dies gilt jedoch nur für den in FIG 4 dargestellten Spezialfall.

Wenn die betroffenen Segmente unterschiedliche physikalische Eigenschaften, wie zum Beispiel unterschiedliche Art und Anzahl von Wicklungen, unterschiedliche Widerstände, verschiedene Längen, etc. aufweisen, dann ergibt sich insbesondere ein von FIG 4 veränderter Kurvenverlauf für die erste oder zweite Stromstärke. In diesem Fall kann der Kurvenverlauf insbesondere verzerrt und nicht symmetrisch sein.

Eine Optimierung der beiden Stromstärken I1 und I2 hängt in erster Linie vom Überdeckungsgrad a zwischen den Primärteilen 16 und dem Sekundärteil 18 ab. Des Weiteren haben die elektrischen Widerstände R1 und R2 der jeweiligen Primärteile 16 ebenfalls einen Einfluss auf die Summe der ohmschen Verlustleistung PV. Die jeweiligen Widerstände können je nach Länge und Anzahl und Art der Wicklungen der Primärteile 16 voneinander unterschiedlich sein. Die so optimierten Stromverläufe beziehungsweise Stromstärken können für den geregelten Betrieb und für den gesteuerten Betrieb angewendet werden.

Die jeweiligen Stromstärken für die erste und zweite Stromstärke können "online", also während einer Antriebsregelung des linearmotorbasierte Transportsystems 10 ermittelt und eingestellt werden. In diesem Fall kann die Steuereinheit in dem Stromsteller integriert sein und während des Betriebs die Stromstärken I1, I2 einstellen beziehungsweise regeln. Eine einfache jedoch effektive Variante bietet sich mittels einer Look-up-Tabelle an. Hier wird eine Aufteilung der Stromstärken I1, I2 in Abhängigkeit von dem Überdeckungsgrad bereits im Vorfeld ermittelt. Die jeweiligen Verhältnisse der ersten und zweiten Stromstärke I1, I2 zueinander sind in diesem Fall in der Look-up-Tabelle hinterlegt und idealerweise in der Motorsteuerung für die Transportwagen 12 hinterlegt.

Beim Betreiben des linearmotorbasierten Transportsystems 10 wird insbesondere ein Motorparameter zum Bereitstellen der jeweiligen Stromstärke für die beteiligten Segmente so angepasst, dass sich die gewünschte Aufteilung der Stromstärken ergibt. Damit können der Geschwindigkeitsregler und die Kraftvorsteuerung der Regelung des Segments in dieser Optimierung unbeeinflusst bleiben.

In einer weiteren beispielhaften Variante werden im gesteuerten Betrieb insbesondere zum sicheren Bewegen des Transportwagens 12 ein konstanter d-Strom sowie eine Kraftvorsteuerung aktiviert. In diesem Modus können beide Anteile in gleicher Weise adaptiert werden. Das heißt beide Segmente haben jeweils eine d-Komponente und eine q-Komponente. Bei beiden Segmenten können die jeweiligen d-Komponenten und q-Komponenten zugleich eingestellt werden. Bei elektrischen Größen wird oft ein rotierendes Koordinatensystem mit zwei senkrecht aufeinander stehenden Achsen d und q gewählt. Die d- und q-Komponenten der jeweiligen Stromstärken können durch eine d/q-Transformation ermittelt werden. Dies hat den Vorteil, dass das rotierende Koordinatensystem mit der Raumzeigerdarstellung von Wechselspannungen und -strömen und ihrem Bezug zueinander identisch ist. Die d-Komponente und q-Komponente der ersten beziehungsweise zweiten Stromstärke sind insbesondere Vektoren, die aufeinander senkrecht stehen. Der Betrag des q-Vektors bildet dabei das Drehmoment, der Betrag des d-Vektors die magnetische Flussdichte ab. Werden die Stromstärken in einem d/q-Koordinatensystem dargestellt, so werden bevorzugt die jeweiligen q-Komponenten der einzelnen Stromstärken angepasst. So kann sowohl im gesteuerten als auch im geregelten Betrieb eine effiziente Ansteuerung der jeweiligen Segmente und eine Erhöhung der Effizienz des linearmotorbasierten Transportsystems 10 erreicht werden.

Die optimierten Stromverläufe für die erste Stromstärke I1 und die zweite Stromstärke I2 ergeben sich aus einer Überlappung von dem Transportwagen 12 mit mehreren (meist genau 2) Primärteilen 16. In den meisten Fällen sind bei einem Segmentübergang zwei Primärteile 16 beteiligt. Die Geometriedaten der Primärteile 16 und des Transportwagens 12 sind im Allgemeinen vorhanden, ebenso wie die jeweiligen Widerstandswerte R1 und R2 der Primärteile 16. Damit ist es möglich, die Gewichtungsfaktoren vorab positionsabhängig zu berechnen und anhand der aktuellen Position diese Faktoren an die jeweiligen Stromsteller zu verteilen. Das heißt die Steuereinheit kann bei bekannter Position des Transportwagens auf den Überdeckungsgrad a schließen und mithilfe dieser Information die optimierten Stromverläufe für die erste und zweite Stromstärke I1, I2 berechnen.

Die einzelnen elektromotorischen Einzelkräfte F1 und F2 können mithilfe von einer induzierten Spannung, der aktuellen Stromstärke, dem einzelnen Widerstand R1 oder R2 sowie mithilfe der Induktivität ermittelt werden. Um die ohmschen Verluste zu minimieren, wird das Primärteil 16 mit der größeren elektromotorischen Kraft F stärker bestromt. Da die elektromotorische Kraft F linear abhängig vom Überdeckungsgrad a ist, sind die optimalen Stromverläufe für die erste und zweite Stromstärke I1 und I2 analog zur Abbildung gemäß FIG 4, die das Verhältnis der Überdeckung a beider Segmente als Basis hat. Das heißt die erste und zweite Stromstärke I1, I2 können jeweils in Abhängigkeit von einer elektromotorischen Einzelkraft F1 oder F2 dargestellt werden. Bei identischer Motorphysik der beiden Segmente (jeweils gleicher Widerstand, Anzahl und Art der Wicklungen, gleiche Länge,...) würde sich lediglich die Skalierung der y-Achse von FIG 4 ändern. Unterscheidet sich das erste Segment physikalisch vom zweiten Segment kann sich ein anderer Kurvenverlauf, wie in FIG 4 gezeigt ist, ergeben, der nicht symmetrisch ist.

In FIG 5 ist beispielhaft die Summe der ohmschen Verluste PV gezeigt, die sich aus den jeweiligen Stromstärkeverläufen für die erste Stromstärke I1 und die zweite Stromstärke I2 ergibt. Die Summe der ohmschen Verluste PV ist in FIG 5 als durchgezogene Linie dargestellt. Der Verlauf der Summe der ohmschen Verluste PV erreicht bei einem Überdeckungsgrad a=0,5 ein Maximum. Zugleich zeigt FIG 5 ebenfalls eine zweite Summe der ohmschen Verluste PS. Diese zweite Summe der ohmschen Verluste PS stellt jene Situation dar, wenn beide Segmente stets mit derselben konstanten Stromstärke bestromt werden. Das heißt die horizontale Linie, welche auf der Höhe 5000 verläuft, entspricht der Verlustleistung gemäß dem Stand der Technik. FIG 5 zeigt deutlich, dass der Kurvenverlauf der optimierten Stromverteilung unterhalb der horizontalen Linie verläuft. Der Kurvenverlauf von PV ist an keiner Stelle größer als der Kurvenverlauf von PS. Lediglich bei einem Überdeckungsgrad a von 0,5 ist kein Unterschied zwischen dem optimierten Verlauf PV und der horizontalen Linie PS auszumachen. Somit zeigt FIG 5 deutlich, dass durch das entsprechende Ermitteln und Einstellen der ersten und zweiten Stromstärke die Summe der ohmschen Verluste PV gegenüber dem Stand der Technik deutlich optimiert werden können.

Damit ermöglicht es diese Erfindung, die Verlustleistung bei dem linearmotorbasierten Transportsystem 10 zu reduzieren und somit beim Betrieb der Anlage Energie zu sparen. Die einzelnen Transportwagen 12 des linearmotorbasierten Transportsystems 10 werden dabei insbesondere von einem Linearmotor angetrieben. Damit ist es gegebenenfalls möglich, bei den Primärteilen 16 Motorelemente mit einer geringeren Nennleistung zu verwenden und damit die Anschaffungskosten zu reduzieren.

Falls eine Temperatur der jeweiligen Motorelemente in den Primärteilen 16 einen begrenzenden Faktor bei einem Produktionsprozess darstellt, kann mithilfe dieser Maßnahme die Zykluszeit reduziert werden, was zu einem höheren Durchsatz der Anlage führen kann. Dies bedeutet, dass bei einer Optimierung der ersten und zweiten Stromstärke I1 und I2 ebenfalls ein unerwünschtes Aufheizen der jeweiligen Motorelemente reduziert werden kann. Dies ergibt sich direkt aus der Tatsache, dass die Summe der ohmschen Verluste PV minimiert wird. Dies führt in aller Regel ebenfalls zu einer geringeren Wärmeentwicklung, da die Effizienz gesteigert wird. Somit kann eine zusätzliche Kühlung des linearmotorbasierten Transportsystems 10 kleiner dimensioniert werden oder im Idealfall sogar komplett entfallen. Verzögerungen beim Produktionsprozess können so vermieden oder reduziert werden und damit kann es gelingen bei einem Produktionsprozess einen höheren Produktdurchsatz zu erreichen. Dies kann die Wirtschaftlichkeit aber auch die Umweltverträglichkeit von Produktionsprozessen verbessern.

**Patentansprüche**

1. Verfahren zum Betreiben eines linearmotorbasierten Transportsystems (10), das einen Transportwagen (12) und ein damit in elektromagnetischer Wechselwirkung stehendes erstes und zweites Segment (k, k+1) einer Transportschiene (14) aufweist, durch Ausführen folgender Verfahrensschritte:

   a) Erfassen eines Überdeckungsgrades (a) des Transportwagens (12) zwischen einem Primärteil (16) im ersten Segment (k) und einem Sekundärteil (18) im Transportwagen (12), wobei der Überdeckungsgrad (a) angibt, welcher Anteil einer Oberfläche des Sekundärteils (18) des Transportwagens (12) sich senkrecht über dem Primärteil (18) des ersten Segments (k) befindet,
   b) Ermitteln einer ersten Stromstärke (I1) für das erste Segment (k) und einer zweiten Stromstärke (I2) für das zweite Segment (k+1) zum Bestromen der beiden Segmente derart, dass

      - eine Summe der resultierenden elektromotorischen Kräfte (F) zwischen dem Transportwagen (12) und den beiden Segmenten einem vorgegebenen Kraftverlauf entspricht und zugleich
      - eine Summe der ohmschen Verluste (PV), verursacht durch die aufgrund der ersten und zweiten Stromstärke (I1, I2) auftretenden Stromflüsse, des ersten und zweiten Segmentes (k, k+1) minimiert wird.

2. Verfahren nach Anspruch 1, wobei der Überdeckungsgrad (a) anhand einer vorgegebenen Geometrie der Transportschiene (14) ermittelt wird.

3. Verfahren nach Anspruch 1, wobei der Überdeckungsgrad (a) in Abhängigkeit von einer jeweils am ersten und zweiten Segment (k, k+1) induzierten Spannung ermittelt wird.

4. Verfahren nach einem der vorigen Ansprüche, wobei der Überdeckungsgrad (a) bei einer Bewegung des Transportwagens (12) kontinuierlich ermittelt und in Abhängigkeit von dem Überdeckungsgrad (a) die erste und zweite Stromstärke (I1, I2) kontinuierlich ermittelt werden.

5. Verfahren nach einem der vorigen Ansprüche, wobei in einem geregelten Betrieb die Stromstärken (I1, I2) aus einem Verfahren zur feldorientierten Regelung resultieren und kraftbildende oder kraftbildende und feldbildende Stromkomponenten aufweisen.

**6.** Verfahren nach einem der Ansprüche 1 bis 4, wobei in einem gesteuerten Betrieb die Stromstärken (I1, I2) aus einem Verfahren zur geberlosen feldorientierten Regelung resultieren und sowohl kraftbildende als auch feldbildende Stromkomponenten aufweisen.

**7.** Verfahren nach einem der vorigen Ansprüche, wobei die erste und zweite Stromstärke (I1, I2) mittels eines Optimierungsverfahrens, insbesondere mittels eines Langrange-Multiplikators ermittelt werden.

**8.** Linearmotorbasiertes Transportsystem (10) mit

- einem Transportwagen (12), der ein Sekundärteil (18) mit einer zweiten Oberfläche zum Generieren einer elektromotorischen Kraft (F) aufweist,
- einer Transportschiene (14), die ein erstes Segment (k), zweites Segment (k+1) und ein Primärteil (16) mit einer ersten Oberfläche aufweist, wobei das Primärteil (16) ausgebildet ist, über die erste Oberfläche eine elektromotorische Kraft (F) auf den Transportwagen (12) zu übertragen und
- eine Steuereinheit, welche ausgestaltet ist, das erste Segment (k) mit einer ersten Stromstärke (I1) und das zweite Segment (k+1) mit einer zweiten Stromstärke (I2) zu bestromen, wenn der Transportwagen (12) zum Teil auf dem ersten und/oder zugleich zum Teil auf dem zweiten Segment (k+1) befindlich ist, wobei die Steuereinheit die erste und zweite Stromstärke (I1, I2) derart ermittelt, dass
- eine Summe der resultierenden elektromotorischen Kräfte (F) für die beiden Segmente (k, k+1) einem vorgegebenen Kraftverlauf entspricht und zugleich
- eine Summe der ohmschen Verluste (PV), verursacht durch die aufgrund der ersten und zweiten Stromstärke (I1, I2) auftretenden Stromflüsse, des ersten und zweiten Segmentes (k, k+1) minimiert wird.

**9.** Linearmotorbasiertes Transportsystem (10) nach Anspruch 8, wobei eine Länge des ersten Segments (k) mit der Länge des zweiten Segments (k+1) identisch ist.

**10.** Linearmotorbasiertes Transportsystem (10) nach Anspruch 8 oder 9, wobei das erste Segment (k) und das zweite Segment (k+1) unmittelbar nebeneinander angeordnet sind.

**11.** Linearmotorbasiertes Transportsystem (10) nach einem der Ansprüche 8 bis 10, wobei der Transportwagen (12) über mehr als zwei Segmente befindlich ist, und für jedes dieser mehr als zwei Segmente ein jeweiliger Überdeckungsgrad ermittelt und zum Ermitteln der jeweiligen Stromstärken für die jeweiligen Segmente berücksichtigt wird.

**12.** Linearmotorbasiertes Transportsystem (10) nach einem der Ansprüche 8 bis 10 mit einem Stromsteller zum Bestromen der jeweiligen Segmente, wobei für das Ermitteln der Stromstärken eine Leistungsgrenze des Stromstellers berücksichtigt wird.

FIG 1

12

14

12

10

12

12

14

20

FIG 2

10

12

18

16

14

20

FIG 3

FIG 4

FIG 5

Europäisches Patentamt
European Patent Office
Office européen des brevets

# EUROPÄISCHER RECHERCHENBERICHT

Nummer der Anmeldung

EP 18 16 7289

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PERREAULT B M: "Optimizing Operation of Segmented Stator Linear Synchronous Motors", PROCEEDINGS OF THE IEEE, IEEE. NEW YORK, US, Bd. 97, Nr. 11, 1. November 2009 (2009-11-01), Seiten 1777-1785, XP011278595, ISSN: 0018-9219, DOI: 10.1109/JPROC.2009.2030234 * das ganze Dokument * ----- | 1-12 | INV. H02P25/06 H02P21/22 |

RECHERCHIERTE SACHGEBIETE (IPC)

H02P

Der vorliegende Recherchenbericht wurde für alle Patentansprüche erstellt

| Recherchenort | Abschlußdatum der Recherche | Prüfer |
|---|---|---|
| München | 27. Juli 2018 | Schneider, Gernot |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................
& : Mitglied der gleichen Patentfamilie, übereinstimmendes Dokument

EPO FORM 1503 03.82 (P04C03)